# EUROPÄISCHE PATENTSCHRIFT

(11) **EP 4 649 350 B1**
(45) Veröffentlichungstag und Bekanntmachung des Hinweises auf die Patenterteilung: **13.05.2026**
(21) Anmeldenummer: 24708240.7
(22) Anmeldetag: 06.03.2024
(51) Int. Cl.: G02B 27/01

(54) **PROJEKTIONSANORDNUNG**
PROJECTION ARRANGEMENT
DISPOSITIF DE PROJECTION

(30) Priorität: 09.03.2023 EP 23160939
(43) Veröffentlichungstag der Anmeldung: 19.11.2025
(73) Patentinhaber: Saint-Gobain Sekurit France, 60150 Thourotte (FR)
(72) Erfinder: CAPPUCCILLI, Michele, 52134 Herzogenrath (DE); GREVERATH, Julian, 52134 Herzogenrath (DE); REUFSTECK, Gabriele, 52134 Herzogenrath (DE); ARNDT, Martin, 52134 Herzogenrath (DE)
(74) Vertreter: Gebauer, Dieter Edmund
(86) Internationale Anmeldenummer: PCT/EP2024/055837
(87) Internationale Veröffentlichungsnummer: WO 2024/184393

(56) Entgegenhaltungen:
- WO-A1-2022/218699
- DE-A1- 102017 100 676
- DE-A1- 102021 101 432
- DE-A1- 102021 119 272

## Beschreibung

Die Erfindung betrifft eine Projektionsanordnung für ein Fahrzeug, ein Kraftfahrzeug mit einer Projektionsanordnung und ein Verfahren zum Betrieb einer Projektionsanordnung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Head-Up-Displays weisen jedoch häufig das Problem auf, dass der Bereich der Windschutzscheibe, der zur Reflexion des vom Projektor projizierten Lichtes vorgesehen ist, eine hohe Transparenz von in der Regel mindestens 70 % aufweisen muss. Das reflektierte Licht des Projektors wird also von Licht aus der äußeren Umgebung überlagert, was je nach Lichtverhältnissen zu einer Kontrastverringerung des virtuellen Bildes und damit zu einer schlechteren visuellen Wahrnehmbarkeit für den Fahrer führen kann. Eine ausreichende visuelle Wahrnehmbarkeit von insbesondere sicherheitsrelevanten Informationen wie beispielsweise Fahrspur-Hilfen, Geschwindigkeitsanzeige oder Drehzahl des Motors sollte bei allen Wetter- und Lichtverhältnissen gewährleistet sein. Um eine Projektionsanordnung, die auf der Head-Up-Display-Technologie basiert und bei der keine unerwünschten Nebenbilder auftreten und gute Erkennbarkeit mit ausreichender Helligkeit und Kontrast der angezeigten Bildinformationen relativ einfach zu bewerkstelligen ist, zu erreichen, kann der Kontrast im Reflexionsbereich der Windschutzscheibe erhöht werden. Die Kontrasterhöhung kann zum Beispiel dadurch erreicht werden, dass der Hintergrund des Reflexionsbereichs größtenteils oder vollständig opak ist.

WO 2022/161894 A1 offenbart eine Fahrzeugscheibe für ein Head-Up-Display, umfassend mindestens eine transparente Scheibe, mindestens einen ersten Maskierungsstreifen in einem Randbereich der Scheibe und mindestens eine lichtlenkende Vorrichtung zum Lenken von Licht in den Fahrzeuginnenraum oder mindestens eine Bildanzeigevorrichtung zur Darstellung von Bildinformationen, welche im Bereich des Maskierungsstreifens, fahrzeuginnenraumseitig des Maskierungsstreifens, angeordnet ist.

Das virtuelle Bild wird üblicherweise in einer sogenannten Eyebox erzeugt. Die Eyebox beschreibt einen Bereich im Innenraum des Fahrzeugs, in dem sich die Augen des Betrachters befinden müssen, um das virtuelle Bild sehen zu können. Als Eyebox wird somit ein Bereich bezeichnet, dessen Höhe und Breite einem theoretischen Sichtfenster entspricht. Ein Betrachter, dessen Augenposition sich innerhalb der Eyebox befindet, kann das virtuelle Bild wahrnehmen, für den Betrachter sind alle Elemente des virtuellen Bildes sichtbar. Bei einer Bewegung der Augen aus der Eyebox hinaus, kann der Betrachter das virtuelle Bild nur noch teilweise oder gar nicht mehr wahrnehmen. Die Eckpunkte der Eyebox und des virtuellen Bildes spannen den Sichtkegel auf. Derjenige Strahlengang, der die Eyeboxmitte mit der Displaymitte verbindet, wird als Mittenstrahl bezeichnet.

Die Strahlrichtung des Projektors kann bei Head-Up-Displays typischerweise durch Spiegel variiert werden, insbesondere vertikal, um die Projektion an die Körpergröße des Betrachters und somit die vertikale Augenposition anzupassen. Der Bereich, in dem sich die Augen des Betrachters bei gegebener Spiegelstellung befinden müssen, um das virtuelle Bild wahrzunehmen, wird wie oben beschrieben als Eyebox bezeichnet. Diese Eyebox kann durch Verstellung der Spiegel vertikal verschoben werden.

DE 10 2015 104 834 A1 offenbart ein Verfahren zur Einstellung einer relativen Position zwischen einer Kopfobenanzeigeeinrichtung eines Kraftfahrzeugs und einer Augenposition eines Nutzers des Kraftfahrzeugs, bei welchem mit einer Bildgebeeinheit der Kopfobenanzeigeeinrichtung eine optische Information erzeugt wird, die mit einem an einem Gehäuse der Kopfobenanzeigeeinrichtung bewegbar angeordneten Kombinierspiegel der Kopfobenanzeigeeinrichtung innerhalb einer Betrachtungszone in Richtung des Nutzers reflektiert wird, wobei abhängig von der Augenposition des Nutzers das Gehäuse mit dem Kombinierspiegel als Gesamteinheit positionell derart verstellt wird, dass die Betrachtungszone auf die Augenposition gerichtet wird.

DE 10 2015 109 027 A1 offenbart eine Head-Up Displayeinheit für ein Fahrzeug zur Erzeugung eines virtuellen Bildes im Sichtfeld des Fahrers auf die Fahrzeugumgebung wobei die Displayeinheit eine Emissionseinheit zur Erzeugung und Abstrahlung eines Bildsignals, das auf einem mehrfach gefalteten Projektionspfad in den Sichtbereich des Fahrers projiziert wird, umfasst und die Displayeinheit mindestens einen beweglichen Reflektor umfasst, der einen Teil des Projektionspfads beeinflusst, und wobei die Darstellung des virtuellen Bilds durch eine gesteuerte Änderung der Orientierung des beweglichen Reflektors beeinflusst wird sowie zusätzlich durch eine Modifizierung des abgestrahlten Bildsignals gegenüber einem Bildsignal im Rohzustand, unter anderem zur Kompensation von Verzerrungen infolge der Krümmung des Windschutzscheibe und einer Verlagerung der Augen-Position sowie einer Fahrzeug-Bewegung.

In DE 10 2017 130 376 A1 ist eine Anzeigevorrichtung als Head-up-Display für ein Fahrzeug mit einer Beleuchtungseinheit offenbart, die ausgeführt ist, Licht zur Darstellung eines virtuellen Bildes abzustrahlen, und einer Optikeinrichtung mit einer Mehrzahl optischer Elemente, die das von der Beleuchtungseinheit abgestrahlte Licht auf ein Anzeigeelement projiziert zur Darstellung des virtuellen Bildes in einer Eyebox, wobei die Beleuchtungseinheit zur festen Montage an dem Fahrzeug ausgeführt ist, die Anzeigevorrichtung eine Montagevorrichtung zur festen Montage an dem Fahrzeug aufweist, und die Optikeinrichtung mit einer Verstelleinrichtung verstellbar an der Montagevorrichtung gehalten ist, um in einem montierten Zustand die Darstellung des Bildes bzw. der Anzeige auf dem Anzeigeelement durch das von der Beleuchtungseinheit abgestrahlte Licht anzupassen und die Optikeinrichtung bei der Verstellung relativ zu der Beleuchtungseinheit zu verstellen.

DE 10 2021 119 272 A1 offenbart eine Projektionseinheit für eine Blickfeldanzeigevorrichtung für ein Fahrzeug, umfassend eine bildgebende Einheit zur Erzeugung eines Lichtstrahlenbündels mit einem Anzeigeinhalt, einen im Strahlengang des Lichtstrahlenbündels angeordneten Spiegel mit einer ersten Verstelleinrichtung, die zu seiner Verkippung zur Anpassung an unterschiedliche Eyebox-Positionen verschiedener Benutzer ausgebildet ist und eine zweite Verstelleinrichtung, die zu einer bildausrichtungserhaltenden Verkippung der bildgebenden Einheit oder einer weiteren optischen Komponente ausgebildet ist, wobei die Projektionseinheit zum Erzeugen eines virtuellen Anzeigebilds in einer virtuellen Bildebene im Blickfeld des Benutzers ausgebildet ist, indem sie das Lichtstrahlenbündel in Richtung einer Reflexionsscheibe ausgibt, von der es zu seiner Eyebox reflektiert wird und die bildausrichtungserhaltende Verkippung so ausgelegt ist, dass die virtuelle Bildebene bei den unterschiedlichen Eyebox-Positionen eine vorbestimmte gleiche Ausrichtung aufweist.

DE 10 2016 214 438 A1 offenbart ein Kraftfahrzeug mit einem Head-up-Display, das einen Projektor zur Erzeugung von einzeln ansteuerbaren Pixeln zur Darstellung eines Bildes und eine mechanisch verstellbare Optik zur Projektion des Bildes auf eine Scheibe des Kraftfahrzeuges umfasst, wobei das Kraftfahrzeug ein Modul zur Bestimmung der Blickrichtung oder der Augenposition eines Fahrers des Kraftfahrzeuges und/oder eines Insassen des Kraftfahrzeuges aufweist, und wobei das Kraftfahrzeug eine Steuerung zur Verschiebung der Pixel mittels des Projektors in Abhängigkeit einer erkannten Änderung der Blickrichtung und zur gleichzeitigen mechanischen Verstellung der Optik in Abhängigkeit der erkannten Änderung der Blickrichtung oder Augenposition umfasst, wobei die mechanisch verstellbare Optik zumindest einen mechanisch verstellbaren Spiegel umfasst.

DE 10 2010 040 694 A1 offenbart Head-up-Displays für Fahrzeuge, die zur Anzeige von Informationen mittels einer Bildgebungseinheit eine durchsichtige Fläche im Fahrzeug in Blickrichtung eines Betrachters als Anzeigebereich verwenden, wobei zwischen der Bildgebungseinheit und dem Anzeigebereich eine Abbildungsoptik angeordnet ist, mit Anpassungsmitteln, mit denen eine Anzeige von Informationen an verschiedene Augenpositionen des Betrachters angepasst werden kann, mit einer Kamera zur Aufnahme des Kopfes des Betrachters und mit einer Bildverarbeitungseinheit zur Auswertung von Aufnahmen der Kamera. Dabei sind Projektionsmittel dazu vorgesehen, eine optisch erfassbare Marke in Richtung des Kopfes des Betrachters abzubilden, und die Bildverarbeitungseinheit ist dazu ausgebildet, auf der Grundlage einer Aufnahme der Kamera die Marke auszuwerten. Die Anpassung an verschiedene Augenpositionen des Betrachters erfolgt mittels eines drehbaren Spiegels.

DE 10 2018 213 363 A1 beschreibt ein Verfahren zum Bestimmen von Einstellparametern für eine einstellbare Komponente eines Kraftfahrzeugs, wobei für drei oder mehr Kopfpositionen einer Testperson im Kraftfahrzeug die Kopfposition sowie zugehörige eingestellte Einstellparameter der einstellbaren Komponente erfasst werden und eine Abbildungsfunktion zwischen den Kopfpositionen und den Einstellparametern der einstellbaren Komponente bestimmt wird.

In DE 10 2017 100 676 A1 ist ein Verfahren zum Kalibrieren einer Kopf-oben-Anzeige eines Kraftfahrzeugs offenbart sowie eine entsprechende Kopf-oben-Anzeige für ein Kraftfahrzeug mit einer hinter einem Kaltlichtspiegel der Kopf-oben-Anzeige angeordneten Infrarotkamera zum Erfassen einer Infrarotstrahlung und mit einer Recheneinrichtung.

DE 199 33 769 A1 beschreibt ein Verfahren und eine Anordnung zur individuellen und selbstständigen Funktionseinstellung von Baugruppen eines Kraftfahrzeugs, insbesondere von der Sicherheit des Fahrzeugführers dienenden Baugruppen auf der Basis von fahrerspezifischen Kenndaten.

DE 10 2021 101 432 A1 offenbart eine Waveguide-basierte Projektionsanzeigevorrichtung mit einem dynamischen Streulichtabsorber für ein Fahrzeug.

WO 2019/238896 A2 offenbart ein Gerät zum Generieren eines virtuellen Bildes mit Verzerrelement und DE 10 2016 224 166 B3 offenbart ein Head-Up-Display mit Bildverzerrung für ein Fahrzeug.

In WO 2022/218699 A1 ist eine Projektionsanordnung umfassend eine Verbundscheibe und eine Bildanzeigevorrichtung offenbart, wobei die Bildanzeigevorrichtung eine auf Lichtfeldtechnik basierende 3D-Bildanzeige aufweist.

Der vorliegenden Erfindung liegt die Aufgabe zugrunde, eine verbesserte Projektionsanordnung bereitzustellen, bei der die Projektion an die vertikale Augenposition des Betrachters angepasst werden kann.

Die Aufgabe der vorliegenden Erfindung wird erfindungsgemäß durch eine Projektionsanordnung gemäß dem Anspruch 1 gelöst. Bevorzugte Ausführungen gehen aus den Unteransprüchen hervor.

Die erfindungsgemäße Projektionsanordnung ist zur Darstellung eines virtuellen Bildes für einen Betrachter, dessen Augenposition sich in einer Eyebox befindet, geeignet und umfasst eine Verbundscheibe, eine Bildanzeigevorrichtung und ein Steuerelement. Wie bei HUDs üblich bestrahlt die Bildanzeigevorrichtung einen Bereich der Verbundscheibe, wo die Strahlung in Richtung des Betrachters reflektiert wird, wodurch ein virtuelles Bild erzeugt wird, welches der Betrachter von ihm aus gesehen hinter der Verbundscheibe wahrnimmt.

Die Verbundscheibe weist einen Hauptdurchsichtsbereich und einen Projektionsbereich auf. Der durch die Bildanzeigevorrichtung bestrahlbare Bereich der Verbundscheibe wird im Rahmen dieser Anmeldung als Projektionsbereich bezeichnet. Der Bereich, durch den ein Fahrzeugführer oder Betrachter hauptsächlich durch die Verbundscheibe sieht, wird im Rahmen dieser Anmeldung als Hauptdurchsichtsbereich bezeichnet.

Erfindungsgemäß ist der Projektionsbereich außerhalb des Hauptdurchsichtsbereichs angeordnet und überlappt somit nicht mit diesem.

Die Verbundscheibe umfasst eine Außenscheibe und eine Innenscheibe, die über eine thermoplastische Zwischenschicht miteinander verbunden sind. Die Verbundscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Verbundscheibe bezeichnet. Mit Außenscheibe wird die der äußeren Umgebung zugewandte Scheibe bezeichnet.

Die Verbundscheibe weist eine Oberkante und eine Unterkante auf sowie zwei dazwischen verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Im Falle einer Windschutzscheibe wird die Oberkante häufig auch als Dachkante und die Unterkante als Motorkante bezeichnet. Die Unterkante kann auch als Scheibenwurzel bezeichnet werden.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die außenseitige Oberfläche der Außenscheibe wird als Seite I bezeichnet. Die innenraumseitige Oberfläche der Außenscheibe wird als Seite II bezeichnet. Die außenseitige Oberfläche der Innenscheibe wird als Seite III bezeichnet. Die innenraumseitige Oberfläche der Innenscheibe wird als Seite IV bezeichnet.

Die Verbundscheibe weist zudem eine opake Maskierungsschicht auf. Die opake Maskierungsschicht ist außerhalb des Hauptdurchsichtsbereichs zumindest im Projektionsbereich angeordnet.

Die Bildanzeigevorrichtung ist innenraumseitig, das heißt in Einbaulage im Fahrzeuginnenraum, angeordnet und auf den Projektionsbereich gerichtet. Die Bildanzeigevorrichtung bestrahlt somit die Verbundscheibe über die innenraumseitige Oberfläche der Innenscheibe. Die innenraumseitige Oberfläche der Innenscheibe ist folglich die der Bildanzeigevorrichtung nächstliegende Oberfläche der Innenscheibe.

Erfindungsgemäß ist die Bildanzeigevorrichtung eine Matrixanzeige. Eine Matrixanzeige ist eine optische Anzeige, die aus einzelnen Bildpunkten in einer Matrix aus horizontalen Zeilen und vertikalen Spalten besteht.

Das Steuerelement ist geeignet, selektiv verschiedene Matrizen der Bildanzeigevorrichtung zur Darstellung des virtuellen Bildes für verschiedene Positionen der Eyebox anzusteuern.

Das Steuerelement ist insbesondere geeignet zumindest für eine obere Position der Eyebox eine erste Matrix, für eine mittlere Position der Eyebox eine zweite Matrix und für eine unter Position der Eyebox eine dritte Matrix der Bildanzeigevorrichtung anzusteuern. Somit wird zur Darstellung eines virtuellen Bildes in einer Eyebox, welche sich in einer oberen Position befindet, das Bild in einem anderen Bereich der Bildanzeigevorrichtung angezeigt als zur Darstellung eines virtuellen Bildes in einer Eyebox, welche sich in einer mittleren Position oder in einer unteren Position befindet. Ebenso wird zur Darstellung eines virtuellen Bildes in einer Eyebox, welche sich in einer mittleren Position befindet, das Bild in einem anderen Bereich der Bildanzeigevorrichtung angezeigt als zur Darstellung eines virtuellen Bildes in einer Eyebox, welche sich in einer oberen Position oder in einer unteren Position befindet. Ebenso wird zur Darstellung eines virtuellen Bildes in einer Eyebox, welche sich in einer unteren Position befindet das Bild in einem anderen Bereich der Bildanzeigevorrichtung angezeigt als zur Darstellung eines virtuellen Bildes in einer Eyebox, welche sich in einer mittleren Position oder in einer oberen Position befindet.

Es versteht sich, dass das Steuerelement auch geeignet sein kann, selektiv mehr als drei verschiedene Matrizen der Bildanzeigevorrichtung zur Darstellung des virtuellen Bildes für mehr als drei verschiedene Positionen der Eyebox anzusteuern.

Die Ansteuerung verschiedener Positionen der Eyebox mittels der selektiven Ansteuerung von Matrizen eines Matrixdisplays bietet gegenüber der mechanischen Verstellung von Spiegeln eines Projektors zur Verstellung der Position der Eyebox den Vorteil, dass eine Ansteuerung der gewünschten Matrix deutlich schneller erfolgen kann als das Einstellen der gewünschten Spiegelposition.

Die Bildanzeigevorrichtung ist bevorzugt ein LCD-Display, LED-Display, mini-LED-Display, OLED-Display oder elektrolumineszentes Display, insbesondere ein LCD-Display oder miniLED Display mit Local Dimming.

Bei dem Betrachter handelt es sich bevorzugt um den Fahrer eines Kraftfahrzeugs. Alternativ kann es sich bei dem Betrachter beispielsweise auch um den Beifahrer oder einen anderen Fahrzeuginsassen handeln.

Wie oben beschrieben wird der durch die Bildanzeigevorrichtung bestrahlbare Bereich der Verbundscheibe im Rahmen dieser Anmeldung als Projektionsbereich bezeichnet. Es versteht sich, dass mit dem durch die Bildanzeigevorrichtung bestrahlbaren Bereich der gesamte Bereich, welcher von allen möglichen Matrizen der Bildanzeigevorrichtung bestrahlbar ist, gemeint ist und nicht nur der Bereich, der von einer einzelnen Matrix oder einer Auswahl von Matrizen der Bildanzeigevorrichtung bestrahlbar ist.

Besonders bevorzugt sind Ausführungsformen, in denen der Projektionsbereich benachbart zur Unterkante der Verbundscheibe angeordnet ist. Dabei kann der Projektionsbereich entweder unmittelbar benachbart oder mittelbar benachbart zur Unterkante angeordnet sein. Unter mittelbar benachbart ist zu verstehen, dass der Projektionsbereich nicht direkt an die Unterkante grenzt, sondern um beispielsweise einige Zentimeter, insbesondere um 5 cm bis 10 cm, von dieser beabstandet angeordnet ist.

In einer besonders bevorzugten Ausführungsform ist die opake Maskierungsschicht in einem umlaufenden Randbereich angeordnet und weist insbesondere in einem Abschnitt, der in Überdeckung zum Projektionsbereich ist, eine größere Breite auf als in hiervon verschiedenen Abschnitten. Eine in einem umlaufenden Randbereich angeordnete opake Maskierungsschicht dient zusätzlich als UV-Schutz für den Montagekleber der Verbundscheibe.

Bevorzugt umfasst die erfindungsgemäße Projektionsanordnung zusätzlich eine Anpassungseinheit, welche aus vom Betrachter eingegeben Angaben zu seiner Augenposition die der Augenposition zugehörige Position der Eyebox ermittelt und anschließend ein elektrisches Signal an das Steuerelement zur selektiven Ansteuerung der zu der ermittelten Position der Eyebox zugehörigen Matrix abgibt.

Der Betrachter kann bevorzugt zu Beginn einer Fahrt beispielsweise angeben, ob er groß, mittelgroß oder klein ist, wodurch Rückschlüsse auf seine Augenposition gezogen werden können und somit durch die Anpassungseinheit die der Augenposition zugehörige Position der Eyebox ermittelt und anschließend ein elektrisches Signal an das Steuerelement zur selektiven Ansteuerung der zu der ermittelten Position der Eyebox zugehörigen Matrix abgegeben werden.

Alternativ können durch die Einstellung des Sitzes und/oder des Rückspiegels und der Außenspiegel Rückschlüsse auf die Augenposition des Betrachters gezogen werden und somit durch die Anpassungseinheit die der Augenposition zugehörige Position der Eyebox ermittelt und anschließend ein elektrisches Signal an das Steuerelement zur selektiven Ansteuerung der zu der ermittelten Position der Eyebox zugehörigen Matrix abgegeben werden.

Alternativ kann der Betrachter bevorzugt zu Beginn einer Fahrt zur Angabe seiner Augenposition ein Testprogramm der Projektionsvorrichtung durchführen und auswählen, wann er das virtuelle Bild eines von der Bildanzeigevorrichtung auf die Verbundscheibe projizierten Bildes am besten sieht, und auf diese Weise seine Augenposition an die Anpassungseinheit übermitteln, wodurch die Anpassungseinheit die der Augenposition zugehörige Position der Eyebox ermittelt und anschließend ein elektrisches Signal an das Steuerelement zur selektiven Ansteuerung der zu der ermittelten Position der Eyebox zugehörigen Matrix abgeben kann.

In einer besonders bevorzugten Ausführungsform umfasst die erfindungsgemäße Projektionsanordnung zusätzlich eine Detektionsvorrichtung zur Detektion der Augenposition des Betrachters und eine elektrische Kontrolleinrichtung. Die elektronische Kontrolleinrichtung ist dazu eingerichtet, auf Basis der mittels der Detektionsvorrichtung ermittelten Augenposition die der Augenposition zugehörige Position der Eyebox zu ermitteln und ein elektrisches Signal an das Steuerelement zur selektiven Ansteuerung der zu der ermittelten Position der Eyebox zugehörigen Matrix abzugeben.

Dem Fachmann sind geeignete Detektionsvorrichtungen bekannt. Beispielsweise kann die Detektionsvorrichtung eine Wärmebildkamera sein. Die Detektionsvorrichtung kann beispielsweise auch auf Infrarotstrahlung basierend die Augenposition detektieren, d.h. eine Infrarotdetektion durchführen, und eine Strahlungsquelle zum Aussenden von Infrarotstrahlung und einen Strahlungsempfänger zum Empfang von Infrarotstrahlung aufweisen.

In Ausführungsformen, in denen die Detektionsvorrichtung eine Infrarotdetektion durchführt und eine Strahlungsquelle zum Aussenden von Infrarotstrahlung und einen Strahlungsempfänger zum Empfangen von Infrarotstrahlung aufweist, können die Strahlungsquelle und der Strahlungsempfänger so ausgerichtet sein, dass die von der Strahlungsquelle ausgesendete Infrarotstrahlung direkt auf das Gesicht des Betrachters trifft und die vom Gesicht des Betrachters reflektierte Infrarotstrahlung direkt auf den Strahlungsempfänger trifft.

Alternativ weist in Ausführungsformen, in denen die Detektionsvorrichtung eine Infrarotdetektion durchführt und eine Strahlungsquelle zum Aussenden von Infrarotstrahlung und einen Strahlungsempfänger zum Empfangen von Infrarotstrahlung aufweist, die Verbundscheibe zusätzlich eine Infrarotstrahlung reflektierende Funktionsschicht auf und die Strahlungsquelle und der Strahlungsempfänger sind so angeordnet, dass von der Strahlungsquelle ausgesendete Infrarotstrahlung von der Funktionsschicht als erste Reflexionsstrahlung auf das Gesicht des Betrachters reflektiert werden kann, die erste Reflexionsstrahlung vom Gesicht des Betrachters als zweite Reflexionsstrahlung auf die Funktionsschicht reflektiert werden kann, und die von der Funktionsschicht als dritte Reflexionsstrahlung reflektierte zweite Reflexionsstrahlung zum Strahlungsempfänger reflektiert und vom Strahlungsempfänger empfangen werden kann.

Die Bildanzeigevorrichtung kann in Draufsicht plan ausgebildet sein. In einer bevorzugten Ausführungsform ist die Bildanzeigevorrichtung in Draufsicht gekrümmt. Die Bildanzeigevorrichtung kann in horizontaler und/oder in vertikaler Richtung gekrümmt sein. Über eine Krümmung kann das Bild besser an die Scheibengeometrie angepasst werden, wodurch Distorsionen beim virtuellen Bild minimiert werden können und einfacher mittels des sogenannten Warping ausgeglichen werden können.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn sie als Scheibe für Busse, Züge oder Traktoren vorgesehen ist.

In Ausführungsformen, in den die Bildanzeigevorrichtung in Draufsicht gekrümmt ist und/oder die Verbundscheibe gebogen ist, umfasst die Projektionsanordnung bevorzugt zusätzlich ein Verzerrelement. Die vom Verzerrelement bewirkte Verzerrung des von der Bildanzeigevorrichtung anzuzeigenden Bildes berücksichtigt die Krümmung der Bildanzeigevorrichtung und/oder die Krümmung der Verbundscheibe, so dass das virtuelle Bild vom Betrachter unverzerrt wahrgenommen werden kann. Eine Krümmung der Bildanzeigevorrichtung passt wie oben beschrieben das Bild bevorzugt bereits weitestgehend an die Scheibengeometrie an, so dass durch das Verzerrelement nur noch Verzerrungen ausgeglichen werden müssen, welche nicht bereits durch die Krümmung der Bildanzeigevorrichtung ausgeglichen werden. Die Bildverzerrung mittels eines Verzerrelements zur Anpassung an eine gekrümmte Bildanzeigevorrichtung und/oder eine gekrümmte Verbundscheibe als Projektionsfläche wird auch als sogenanntes Warping bezeichnet. Hierfür werden insbesondere Warping-Matrizen oder Warping-Parametersätze verwendet. Dem Fachmann sind geeignete Verzerrelemente bekannt.

Wie oben beschrieben, weist die Verbundscheibe außerhalb des Hauptdurchsichtsbereichs zumindest im Projektionsbereich eine opake Maskierungsschicht auf, wodurch eine gute Bilddarstellung mit hohem Kontrast zu einem durch die opake Maskierungsschicht ausgebildeten opaken Hintergrund ermöglicht ist, so dass die Bilddarstellung hell erscheint und damit auch ausgezeichnet erkennbar ist. Dies ermöglicht in vorteilhafter Weise eine Reduktion der Leistung der Bildanzeigevorrichtung und somit einen verminderten Energieverbrauch. Dies ist ein Vorteil der erfindungsgemäßen Projektionsanordnung.

Bevorzugt ist die opake Maskierungsschicht als eine Beschichtung der innenraumseitigen Oberfläche der Außenscheibe oder der außenseitigen Oberfläche der Innenscheibe, als ein zwischen der Außenscheibe und der Innenscheibe angeordnetes opakes Einlegeelement oder als ein opak gefärbter Bereich der thermoplastischen Zwischenschicht ausgebildet.

Die opake Maskierungsschicht ist bevorzugt eine Beschichtung aus einer oder mehreren Schichten. Alternativ kann sie aber auch wie oben beschrieben ein in die Verbundscheibe eingelegtes, opakes Element sein, beispielsweise eine Folie. Gemäß einer bevorzugten Ausgestaltung der Verbundscheibe besteht die opake Maskierungsschicht aus einer Einzelschicht. Dies hat den Vorteil einer besonders einfachen und kostengünstigen Fertigung der Verbundscheibe, da nur eine einzige Schicht für die opake Maskierungsschicht ausgebildet werden muss.

Bei der opaken Maskierungsschicht handelt es sich insbesondere um einen opaken Abdeckdruck aus einer dunklen, bevorzugt schwarzen, Emaille. Eine als opaker Abdeckdruck ausgebildete opake Maskierungsschicht kann vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung.

Eine als ein opak gefärbter Bereich der thermoplastischen Zwischenschicht ausgebildete opake Maskierungsschicht kann auch realisiert werden, in dem eine aus einer opaken thermoplastischen Folie und einer transparenten thermoplastischen Folie zusammengesetzte thermoplastische Zwischenschicht eingesetzt wird. Die opake thermoplastische Folie und transparente thermoplastische Folie werden vorzugsweise versetzt voneinander angeordnet, sodass sich beide Folien in Durchsicht durch die Verbundscheibe nicht überdecken. Die transparente und die opake Folie bestehen aus dem gleichen Kunststoff oder enthalten vorzugsweise den gleichen Kunststoff. Die Materialien, auf dessen Basis die opake Folie und die transparente Folie ausgebildet sein können, sind jene, die auch für die thermoplastische Zwischenschicht beschrieben sind. Die opake Folie ist vorzugsweise eine gefärbte Folie, die verschiedene Farben, insbesondere schwarz, aufweisen kann.

In einer besonders bevorzugten Ausführungsform umfasst die Verbundscheibe zusätzlich ein Reflexionselement zur Reflexion von sichtbarem Licht. In dieser Ausführungsform ist im Projektionsbereich zwischen der Außenscheibe und der Innenscheibe oder auf der innenraumseitigen Oberfläche der Innenscheibe ein Reflexionselement zur Reflexion von sichtbarem Licht angeordnet, wobei das Reflexionselement in Durchsicht durch die Verbundscheibe räumlich vor der opaken Maskierungsschicht angeordnet ist.

Der Ausdruck "in Durchsicht durch die Verbundscheibe" bedeutet, dass durch die Verbundscheibe geblickt wird, ausgehend von der innenraumseitigen Oberfläche der Innenscheibe. Im Sinne der vorliegenden Erfindung bedeutet "räumlich vor", dass das Reflexionselement räumlich weiter entfernt von der außenseitigen Oberfläche der Außenscheibe angeordnet ist als die opake Maskierungsschicht.

Erfindungsgemäß ist somit auch eine Projektionsanordnung zur Darstellung eines virtuellen Bildes für einen Betrachter, dessen Augenposition sich in einer Eyebox befindet, mindestens umfassend
- eine Verbundscheibe mit einem Projektionsbereich, einem Hauptdurchsichtsbereich, einer Oberkante, einer Unterkante und zwei seitlichen Scheibenkanten, wobei der Projektionsbereich außerhalb des Hauptdurchsichtbereichs angeordnet ist und die Verbundscheibe eine Außenscheibe mit einer außenseitigen Oberfläche und einer innenraumseitigen Oberfläche, eine Innenscheibe mit einer außenseitigen Oberfläche und einer innenraumseitigen Oberfläche und eine zwischen der Außenscheibe und der Innenscheibe angeordnete thermoplastische Zwischenschicht umfasst und außerhalb des Hauptdurchsichtsbereichs zumindest im Projektionsbereich eine opake Maskierungsschicht aufweist, und wobei im Projektionsbereich zwischen der Außenscheibe und der Innenscheibe oder auf der innenraumseitigen Oberfläche der Innenscheibe ein Reflexionselement zur Reflexion von sichtbarem Licht angeordnet ist, welches in Durchsicht durch die Verbundscheibe räumlich vor der opaken Maskierungsschicht angeordnet ist,
- eine innenraumseitig angeordnete Bildanzeigevorrichtung, welche auf den Projektionsbereich gerichtet ist, wobei die Bildanzeigevorrichtung eine Matrixanzeige ist, und
- ein Steuerelement, welches geeignet ist, selektiv verschiedene Matrizen der Bildanzeigevorrichtung zur Darstellung des virtuellen Bildes für verschiedene Positionen der Eyebox anzusteuern.

Das Reflexionselement kann als eine Beschichtung der innenraumseitigen Oberfläche oder der außenseitigen Oberfläche der Innenscheibe oder der innenraumseitigen Oberfläche der Außenscheibe ausgebildet sein. Dabei kann die Beschichtung unmittelbar benachbart zur innenraumseitigen Oberfläche oder zur außenseitigen Oberfläche der Innenscheibe oder unmittelbar benachbart zur innenraumseitigen Oberfläche der Außenscheibe angeordnet sein oder alternativ noch mindestens eine andere Schicht zwischen der jeweiligen Oberfläche und der Beschichtung angeordnet sein.

Das Reflexionselement kann alternativ als eine Beschichtung auf einer Dünnglasscheibe oder Folie oder als eine reflektierende Folie ausgebildet sein, welche zwischen der thermoplastischen Zwischenschicht und der Innenscheibe oder zwischen der thermoplastischen Zwischenschicht und der Außenscheibe angeordnet ist oder auf der innenraumseitigen Oberfläche der Innenscheibe aufgeklebt ist. Die Dünnglasscheibe weist bevorzugt eine Dicke von 20 µm bis 500 µm, besonders bevorzugt von 50 µm bis 300 µm, ganz besonders bevorzugt von 50 µm bis 100 µm, beispielsweise 70 µm, auf.

Das Reflexionselement reflektiert sichtbares Licht bevorzugt zu mindestens 10 %, besonders bevorzugt zu mindestens 40 %, ganz besonders bevorzugt zu mindestens 70 %. Das Reflexionselement reflektiert sichtbares Licht bevorzugt zu höchstens 90 %. Mit "reflektiert" ist im Sinne der Erfindung gemeint, dass das Reflexionselement sichtbares Licht reflektiert, welches auf es auftrifft. Die Reflexion in einem bestimmten Prozentbereich bedeutet im Sinne der Erfindung einen gemittelten Reflexionsgrad bei einem definierten Einfallswinkel (65°). Das Reflexionselement ist dazu vorgesehen, ein von der Bildanzeigevorrichtung auf das Reflexionselement projiziertes Bild zu reflektieren. Das Reflexionselement kann transparent sein, ist aber bevorzugt opak.

Dem Fachmann sind geeignete Reflexionselemente bekannt.

Das Reflexionselement kann wie oben beschrieben transparent sein, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Verbundscheibe nicht wesentlich einschränkt. Es kann in Ausführungsformen nur der Projektionsbereich der Verbundscheibe mit dem Reflexionselement versehen sein. Es können in alternativen Ausführungsformen aber auch weitere Bereiche mit dem Reflexionselement versehen sein und die Verbundscheibe kann im wesentlichen vollflächig mit dem Reflexionselement versehen sein, was herstellungsbedingt bevorzugt sein kann. In einer Ausgestaltung der Erfindung sind mindestens 80% der Scheibenoberfläche mit dem Reflexionselement versehen. Insbesondere ist das Reflexionselement vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit dem Reflexionselement versehen sind. Der umlaufende Randbereich weist beispielsweise eine Breite von bis zu 20 cm auf. Er verhindert den direkten Kontakt des Reflexionselements zur umgebenden Atmosphäre, so dass das Reflexionselement im Innern der Verbundscheibe vor Korrosion und Beschädigung geschützt ist.

Es versteht sich, dass, wenn das Reflexionselement nicht nur im Projektionsbereich sondern auch zumindest teilweise im Hauptdurchsichtsbereich angeordnet ist, das Reflexionselement transparent ist, so dass die Durchsicht durch die Verbundscheibe im Hauptdurchsichtsbereich gewährleistet ist.

Bevorzugt ist das Reflexionselement opak und nur außerhalb des Hauptdurchsichtsbereichs angeordnet und besonders bevorzugt ist das Reflexionselement opak und nur im Projektionsbereich angeordnet.

Bei einem opaken Reflexionselement handelt es sich insbesondere um ein Element enthaltend eine Spiegelschicht.

Die Bildanzeigevorrichtung dient zur Erzeugung von p-polarisiertem Licht und/oder s-polarisiertem Licht (Bildinformationen), das im Projektionsbereich auf die Verbundscheibe trifft und in Richtung des Betrachters reflektiert wird.

In Ausführungsformen der erfindungsgemäßen Projektionsanordnung, in denen die Verbundscheibe keine Reflexionselement aufweist, ist die Strahlung der Bildanzeigevorrichtung bevorzugt vollständig oder nahezu vollständig s-polarisiert (im Wesentlichen rein s-polarisiert). Der s-polarisierte Strahlungsanteil beträgt dabei 100% oder weicht nur unwesentlich davon ab. In diesen Ausführungsformen wird das von der Bildanzeigevorrichtung abgestrahlte s-polarisierte Licht an der innenraumseitigen Oberfläche der Innenscheibe in Richtung des Betrachters reflektiert.

In Ausführungsformen der erfindungsgemäßen Projektionsanordnung, in denen die Verbundscheibe ein zwischen der Außenscheibe und der Innenscheibe angeordnetes Reflexionselement aufweist, ist das Reflexionselement zur Reflexion von p-polarisierter Strahlung geeignet und die Strahlung der Bildanzeigevorrichtung ist bevorzugt vollständig oder nahezu vollständig p-polarisiert (im Wesentlichen rein p-polarisiert). Der p-polarisierte Strahlungsanteil beträgt dabei 100% oder weicht nur unwesentlich davon ab. In diesen Ausführungsformen wird das von der Bildanzeigevorrichtung abgestrahlte p-polarisierte Licht an dem Reflexionselement in Richtung des Betrachters reflektiert.

In Ausführungsformen der erfindungsgemäßen Projektionsanordnung, in denen die Verbundscheibe ein auf der innenraumseitigen Oberfläche der Innenscheibe angeordnetes Reflexionselement aufweist, ist das Reflexionselement zur Reflexion von p-polarisierter und/oder s-polarisierter Strahlung geeignet und die Strahlung der Bildanzeigevorrichtung ist entsprechend p-polarisiert und/oder s-polarisiert. In diesen Ausführungsformen wird das von der Bildanzeigevorrichtung abgestrahlte Licht an dem Reflexionselement in Richtung des Betrachters reflektiert.

Die von der Bildanzeigevorrichtung ausgesendete Strahlung bestrahlt beim Betrieb der Projektionsanordnung einen Bereich des Projektionsbereich zur Erzeugung der Projektion. Die Strahlung der Bildanzeigevorrichtung liegt im sichtbaren Spektralbereich des elektromagnetischen Spektrums - typische Bildanzeigevorrichtungen arbeiten mit den Wellenlängen von ca. 470 nm, 550 nm und 630 nm (RGB). Ausführungsformen der Projektionsanordnung, in denen die Verbundscheibe ein Reflexionselement aufweist und die Bildanzeigevorrichtung p-polarisierte Strahlung aussendet sind bevorzugt, da diese den Vorteil haben, dass das virtuelle Bild für Träger von polarisationsselektiven Sonnenbrillen erkennbar ist, welche typischerweise nur p-polarisierte Strahlung passieren lassen und s-polarisierte Strahlung blocken.

Mit dem Begriff p-polarisiertes Licht ist Licht des sichtbaren Spektrums gemeint, das eine p-Polarisation aufweist. Die Betrachtung der Polarisationsrichtung erfolgt dabei bezogen auf die Einfallsebene der Strahlung auf der Verbundscheibe. Als p-polarisierte Strahlung wird eine Strahlung bezeichnet, deren elektrisches Feld in der Einfallsebene schwingt. Als s-polarisierte Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt. Anders ausgedrückt die Polarisation, also insbesondere der Anteil an p- und s-polarisierter Strahlung, wird an einem Punkt des von der Lichtquelle bestrahlten Bereichs bestimmt, bevorzugt im geometrischen Zentrum des bestrahlten Bereichs. Da Verbundscheiben gekrümmt sein können (beispielweise, wenn sie als Windschutzscheibe ausgebildet sind), was Auswirkungen auf die Einfallsebene der Strahlung hat, können in den übrigen Bereichen leicht davon abweichende Polarisationsanteile auftreten, was aus physikalischen Gründen unvermeidlich ist.

Die erfindungsgemäße Verbundscheibe ist bevorzugt eine Windschutzscheibe eines Fahrzeugs, insbesondere eines Kraftfahrzeugs, beispielsweise eines Personen- oder Lastkraftwagens. Projektionsanordnungen, bei denen die Strahlung der Bildanzeigevorrichtung an einer Windschutzscheibe reflektiert wird, um ein für den Betrachter, insbesondere den Fahrer, wahrnehmbares Bild zu erzeugen, sind besonders gebräuchlich.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

In einer bevorzugten Ausführungsform weist die Innenscheibe eine Dicke von maximal 1,6, mm, besonders bevorzugt von maximal 1,4 mm, ganz besonders bevorzugt von maximal 1,1 mm auf.

Die Außenscheibe, die Innenscheibe und die thermoplastische Zwischenschicht können klar und farblos, aber auch getönt oder gefärbt sein. Die Gesamttransmission durch die Windschutzscheibe (samt Reflexionsbeschichtung) beträgt in einer bevorzugten Ausgestaltung im Hauptdurchsichtsbereich größer 70% (Lichtart A). Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Bevorzugt ist die Innenscheibe nicht gefärbt oder getönt.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie (Verbindefolie) ausgebildet. Die Dicke der thermoplastischen Zwischenschicht beträgt bevorzugt von 0,2 mm bis 2 mm, besonders bevorzugt von 0,3 mm bis 1 mm. Die thermoplastische Zwischenschicht kann durch eine einzelne Folie ausgebildet sein oder auch durch mehr als eine Folie. Es kann sich bei der thermoplastischen Zwischenschicht auch um eine Folie mit funktionellen Eigenschaften, beispielsweise eine Folie mit akustisch dämpfenden Eigenschaften handeln.

Die Verbundscheibe kann in Ausführungsformen auch mehr als eine thermoplastische Zwischenschicht aufweisen.

Die thermoplastische Zwischenschicht kann eine im Wesentlichen konstante Dicke aufweisen, abgesehen von einer etwaigen fachüblichen Oberflächenrauigkeit. Alternativ kann die thermoplastische Zwischenschicht aber auch als Keilfolie ausgebildet sein.

Die Verbundscheibe kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Soll die Verbundscheibe gebogen sein, so werden die Außenscheibe und die Innenscheibe bevorzugt vor der Lamination und bevorzugt nach etwaigen Beschichtungsprozessen einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Zur Herstellung der erfindungsgemäßen Projektionsanordnung werden die Verbundscheibe und die Bildanzeigevorrichtung derart zueinander angeordnet, dass die Innenscheibe der Bildanzeigevorrichtung zugewandt ist und die Bildanzeigevorrichtung auf den Projektionsbereich gerichtet ist.

Erfindungsgemäß ist auch ein Kraftfahrzeug, welches eine erfindungsgemäße Projektionsanordnung aufweist.

Erfindungsgemäß ist auch ein Verfahren zum Betrieb einer Projektionsanordnung zur Darstellung eines virtuellen Bildes für einen Betrachter, dessen Augenposition sich in einer Eyebox befindet, wobei die Projektionsanordnung eine Verbundscheibe, eine Bildanzeigevorrichtung und ein Steuerelement umfasst, und wobei die Position der Eyebox ermittelt wird und das Steuerelement zur Darstellung des virtuellen Bildes selektiv die zu der ermittelten Position der Eyebox zugehörige Matrix der Bildanzeigevorrichtung ansteuert.

Die Verbundscheibe weist einen Projektionsbereich, einen Hauptdurchsichtsbereich, eine Oberkante, eine Unterkante und zwei seitliche Scheibenkanten auf, wobei der Projektionsbereich außerhalb des Hauptdurchsichtbereichs angeordnet ist, und die Verbundscheibe umfasst eine Außenscheibe mit einer außenseitigen Oberfläche und einer innenraumseitigen Oberfläche, eine Innenscheibe mit einer außenseitigen Oberfläche und einer innenraumseitigen Oberfläche und eine zwischen der Außenscheibe und der Innenscheibe angeordnete thermoplastische Zwischenschicht und weist außerhalb des Hauptdurchsichtsbereichs zumindest im Projektionsbereich eine opake Maskierungsschicht auf.

Die Bildanzeigevorrichtung ist innenraumseitig angeordnet, auf den Projektionsbereich gerichtet und ist eine Matrixanzeige.

Die vorstehend beschriebenen bevorzugten Ausgestaltungen der erfindungsgemäßen Projektionsanordnung gelten entsprechend auch für das erfindungsgemäße Verfahren.

Die Erfindung umfasst weiter die Verwendung einer erfindungsgemäßen Projektionsanordnung in Fahrzeugen für den Verkehr auf dem Lande, in der Luft oder zu Wasser, wobei die Verbundscheibe bevorzugt eine Windschutzscheibe ist.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: eine Draufsicht auf die Verbundscheibe einer Ausführungsform einer erfindungsgemäßen Projektionsanordnung,
- Fig. 2: einen Querschnitt durch die in der Fig. 1 gezeigte Ausführungsform einer erfindungsgemäßen Projektionsanordnung,
- Fig. 3a bis 3c: Draufsichten auf eine Bildanzeigevorrichtung,
- Fig. 4: einen Querschnitt durch eine Ausführungsform einer Verbundscheibe,
- Fig. 5: einen Querschnitt durch eine weitere Ausführungsform einer Verbundscheibe,
- Fig. 6: einen Querschnitt durch eine weitere Ausführungsform einer Verbundscheibe,
- Fig. 7: einen Querschnitt durch eine weitere Ausführungsform einer Verbundscheibe,
- Fig. 8: einen Querschnitt durch eine weitere Ausführungsform einer Verbundscheibe,
- Fig. 9: einen Querschnitt durch eine weitere Ausführungsform einer Verbundscheibe,
- Fig. 10: einen Querschnitt durch eine weitere Ausführungsform einer Verbundscheibe,
- Fig. 11: einen Querschnitt durch eine weitere Ausführungsform einer Verbundscheibe,
- Fig. 12: einen Querschnitt durch eine weitere Ausführungsform einer Verbundscheibe, und
- Fig. 13: einen Querschnitt durch eine weitere Ausführungsform einer erfindungsgemäßen Projektionsanordnung.

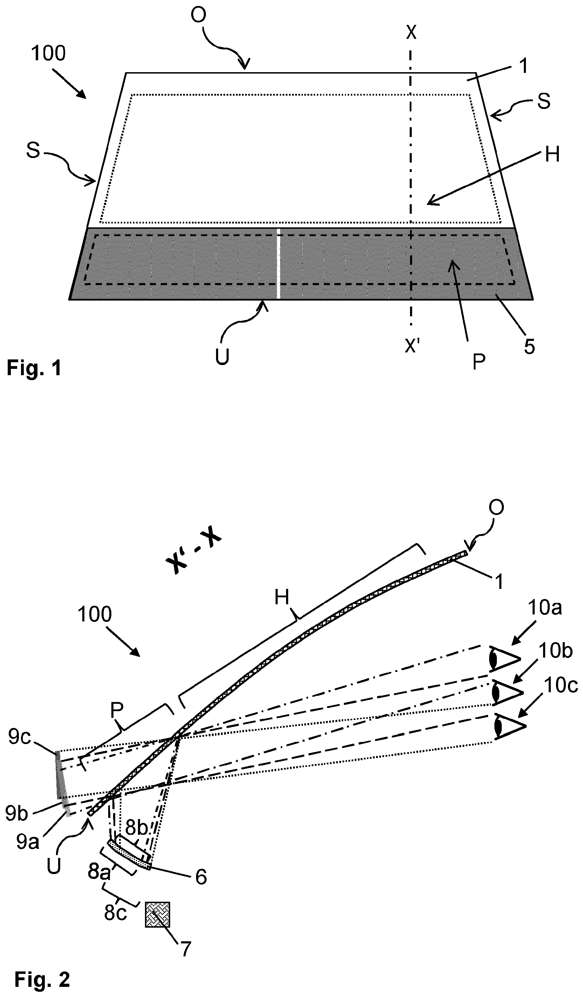

Fig. 1 zeigt eine Draufsicht auf die Verbundscheibe 1 einer Ausführungsform einer erfindungsgemäßen Projektionsanordnung 100. Die Verbundscheibe 1 weist eine Oberkante O eine Unterkante U und zwei seitliche Scheibenkanten S auf. Zudem ist in der Fig. 1 der Hauptdurchsichtsbereich H und der Projektionsbereich P der Verbundscheibe 1 eingezeichnet. In Fig. 1 ist auch zu erkennen, in welchem Bereich die Verbundscheibe 1 in der in der Fig. 1 gezeigten Ausführungsform eine opake Maskierungsschicht 5 aufweist. In der in der Fig. 1 gezeigten Ausführungsform ist der Projektionsbereich P mittelbar benachbart zur Unterkante U angeordnet, beispielsweise 5 cm von der Unterkante U entfernt angeordnet. Die opake Maskierungsschicht 5 ist unmittelbar benachbart zur Unterkante U angeordnet und erstreckt sich zwischen den Seitenkanten S.

Fig. 2 zeigt einen Querschnitt durch eine Ausführungsform einer erfindungsgemäßen Projektionsanordnung 100, wobei dies dem Querschnitt entlang der Schnittlinie X'-X der Fig. 1 entspricht. Wie aus der Fig. 2 ersichtlich ist, umfasst die dargestellte erfindungsgemäße Projektionsanordnung 100 eine Verbundscheibe 1, eine Bildanzeigevorrichtung 6 und ein Steuerelement 7.

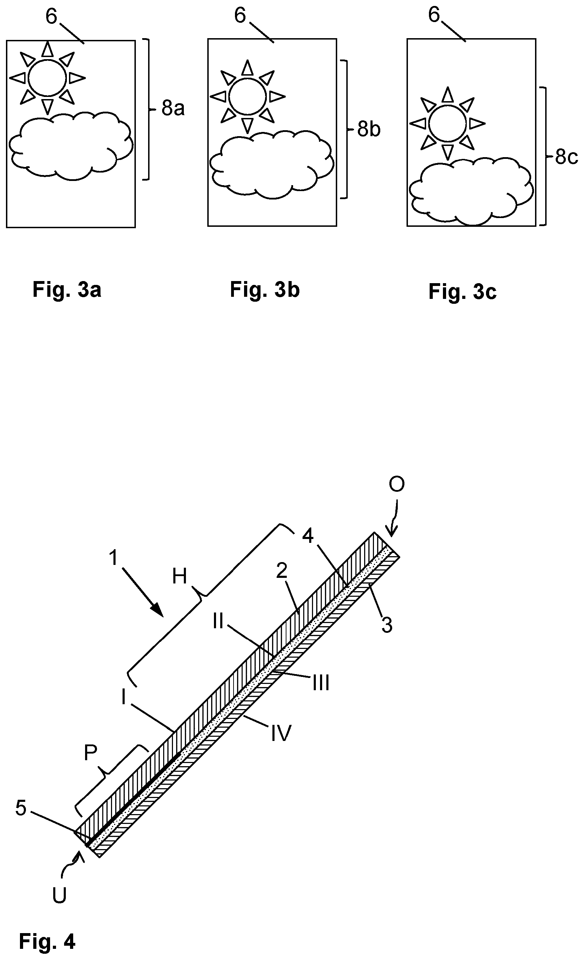

Die Verbundscheibe 1 kann beispielsweise wie in den Fig. 4 bis 12 gezeigt aufgebaut sein.

Die Bildanzeigevorrichtung 6 ist innenraumseitig angeordnet, auf den Projektionsbereich P gerichtet und eine Matrixanzeige. Die Bildanzeigevorrichtung 6 ist beispielsweise ein LCD-Display.

In der Fig. 2 sind drei verschieden positionierte Eyeboxen eingezeichnet, die obere Eyebox ist mit dem Bezugszeichen 10a versehen, die mittlere Eyebox mit dem Bezugszeichen 10b und die untere Eyebox mit dem Bezugszeichen 10c. Die Eyeboxen sind in der Fig. 2 durch Augen dargestellt.

In der in der Fig. 2 gezeigten Ausführungsform ist der Strahlengang von drei verschiedenen Matrizen der Bildanzeigevorrichtung 6 gezeigt. Bei Einsatz der Matrix 8a trifft das von der Bildanzeigevorrichtung 6 abgestrahlte Licht in einem Bereich des Projektionsbereichs P auf die Verbundscheibe 1 und wird von dieser in Richtung des Betrachters, dessen Augenposition sich in der Eyebox 10a befindet, reflektiert, so dass der Betrachter das virtuelle Bild 9a sieht. Bei Einsatz der Matrix 8b trifft das von der Bildanzeigevorrichtung 6 abgestrahlte Licht in einem Bereich des Projektionsbereichs P auf die Verbundscheibe 1 und wird von dieser in Richtung des Betrachters, dessen Augenposition sich in der Eyebox 10b befindet, reflektiert, so dass der Betrachter das virtuelle Bild 9b sieht. Bei Einsatz der Matrix 8c trifft das von der Bildanzeigevorrichtung 6 abgestrahlte Licht in einem Bereich des Projektionsbereichs P auf die Verbundscheibe 1 und wird von dieser in Richtung des Betrachters, dessen Augenposition sich in der Eyebox 10c befindet, reflektiert, so dass der Betrachter das virtuelle Bild 9c sieht. Es ergibt sich in je nach Auswahl der Matrix 8a, 8b, 8c eine Verstellung der Lage der Eyebox 10a, 10b, 10c in vertikaler Richtung.

Das Steuerelement 7 ist geeignet selektiv die verschiedenen Matrizen 8a, 8b, 8c der Bildanzeigevorrichtung 6 zur Darstellung des virtuellen Bildes 9a, 9b, 9c für die verschiedenen Positionen der Eyebox 10a, 10b, 10c anzusteuern. Die verschiedenen Matrizen 8a, 8b und 8c überlappen teilweise in der in der Fig. 2 gezeigten Ausführungsform einer erfindungsgemäßen Projektionsanordnung 100. Es ist aber auch möglich, dass das Steuerelement 7 für verschiedene Positionen der Eyebox verschiedene Matrizen ansteuert, welche voneinander getrennt sind und somit nicht zumindest teilweise überlappen.

In den Fig. 3a, 3b und 3c sind Draufsichten auf eine Bildanzeigevorrichtung 6 gezeigt, wie sie in einer erfindungsgemäßen Projektionsanordnung eingesetzt werden kann.

Fig. 3a zeigt eine Draufsicht auf eine Bildanzeigevorrichtung 6, in der das Bild mittels der Matrix 8a angezeigt wird. Fig. 3b zeigt eine Draufsicht, in der das Bild mittels der Matrix 8b angezeigt wird. Fig. 3c zeigt eine Draufsicht, in der das Bild mittels der Matrix 8c angezeigt wird. Die Matrizen 8a, 8b und 8c überlappen teilweise miteinander.

Der nicht aktive Bereich der Bildanzeigevorrichtung 6, d.h. der Bereich außerhalb der jeweiligen aktiven Matrix kann komplett ausgeschaltet werden, wodurch Strom gespart werden kann.

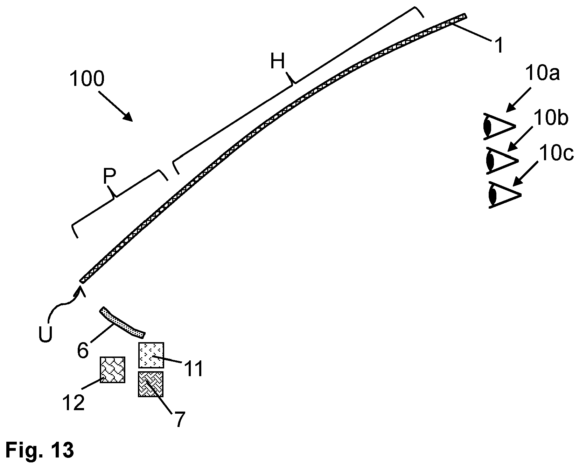

Fig. 4 zeigt einen Querschnitt durch eine Ausführungsform einer Verbundscheibe 1 für eine erfindungsgemäße Projektionsanordnung 100. Die Verbundscheibe 1 ist in der Fig. 4 plan dargestellt. Es versteht sich, dass die Verbundscheibe 1 auch gebogen sein kann, wie dies beispielsweise auch in den Fig. 2 und 13 dargestellt ist. In der in der Fig. 4 gezeigten Ausführungsform weist Verbundscheibe 1 eine Oberkante O und eine Unterkante U auf.

Zudem ist in der Fig. 4 der Hauptdurchsichtsbereich H und der Projektionsbereich P der Verbundscheibe 1 eingezeichnet. Die Verbundscheibe 1 umfasst eine Außenscheibe 2 mit einer außenseitigen Oberfläche I und einer innenraumseitigen Oberfläche II und eine Innenscheibe 3 mit einer außenseitigen Oberfläche III und einer innenraumseitigen Oberfläche IV, die über eine thermoplastische Zwischenschicht 4 miteinander verbunden sind.

Die thermoplastische Zwischenschicht 4 ist beispielsweise eine aus PVB bestehende Zwischenschicht und weist eine Dicke von 0,76 mm auf. Die thermoplastische Zwischenschicht 4 weist eine im Wesentlichen konstante Dicke auf, abgesehen von einer etwaigen fachüblichen Oberflächenrauigkeit - sie ist nicht als sogenannte Keilfolie ausgebildet. Alternativ kann die thermoplastische Zwischenschicht 4 aber auch als Keilfolie ausgebildet sein.

Die Außenscheibe 2 und die Innenscheibe 3 bestehen beispielsweise aus Kalk-Natron-Glas. Die Außenscheibe 2 weist beispielsweise eine Dicke von 2,1 mm auf, die Innenscheibe 3 weist beispielsweise eine Dicke von 1,6 mm oder von 1,1 mm auf.

In der in der Fig. 4 gezeigten Ausführungsform ist auf der innenraumseitigen Oberfläche II der Außenscheibe 2 eine opake Maskierungsschicht 5 angrenzend an die Unterkante U in einem Bereich, der außerhalb des Hauptdurchsichtsbereichs H angeordnet ist und zumindest den Projektionsbereich P umfasst, angeordnet. Die opake Maskierungsschicht 5 ist beispielsweise ein Abdeckdruck aus einer dunklen, bevorzugt schwarzen, Emaille. Alternativ kann die opake Maskierungsschicht 5 auch als ein zwischen der Außenscheibe 2 und der thermoplastischen Zwischenschicht 4 angeordnetes opakes Einlegeelement, beispielsweise eine schwarze Polyethylenterephthalat (PET)-Folie, ausgebildet sein.

In einer erfindungsgemäßen Projektionsanordnung 100 mit einer Verbundscheibe 1 gemäß der in der Fig. 4 gezeigten Ausführungsform ist die Strahlung der Bildanzeigevorrichtung 6 bevorzugt vollständig oder nahezu vollständig s-polarisiert und das von der Bildanzeigevorrichtung 6 abgestrahlte s-polarisierte Licht wird an der innenraumseitigen Oberfläche IV der Innenscheibe 3 in Richtung des Betrachters reflektiert.

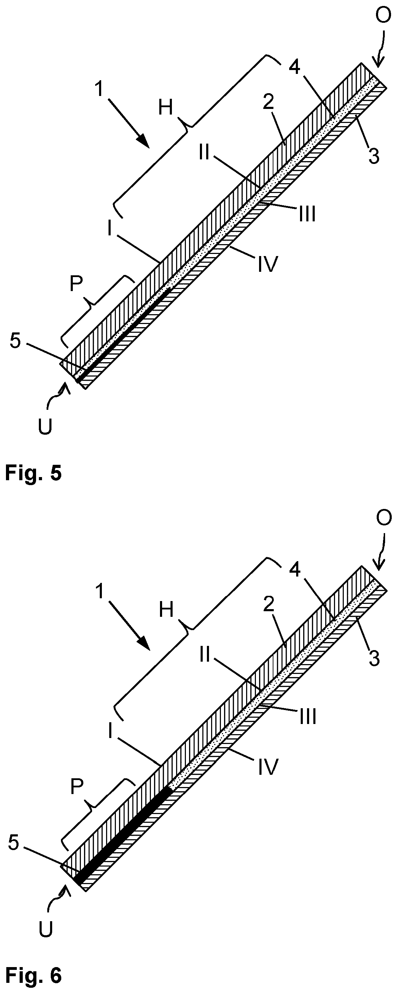

Fig. 5 zeigt einen Querschnitt durch eine weitere Ausführungsform einer Verbundscheibe 1 für eine erfindungsgemäße Projektionsanordnung 100. Die in der Fig. 5 gezeigte Ausführungsform unterscheidet sich von der in der Fig. 4 gezeigten nur dahingehend, dass die opake Maskierungsschicht 5 nicht auf der innenraumseitigen Oberfläche II der Außenscheibe 2 sondern auf der außenseitigen Oberfläche III der Innenscheibe 3 angeordnet ist. Die opake Maskierungsschicht 5 ist beispielsweise ein Abdeckdruck aus einer dunklen, bevorzugt schwarzen, Emaille. Alternativ kann die opake Maskierungsschicht 5 auch als ein zwischen der Innenscheibe 3 und der thermoplastischen Zwischenschicht 4 angeordnetes opakes Einlegeelement, beispielsweise eine schwarze PET-Folie, ausgebildet sein.

In einer erfindungsgemäßen Projektionsanordnung 100 mit einer Verbundscheibe 1 gemäß der in der Fig. 5 gezeigten Ausführungsform ist die Strahlung der Bildanzeigevorrichtung 6 bevorzugt vollständig oder nahezu vollständig s-polarisiert und das von der Bildanzeigevorrichtung 6 abgestrahlte s-polarisierte Licht wird an der innenraumseitigen Oberfläche IV der Innenscheibe 3 in Richtung des Betrachters reflektiert.

Fig. 6 zeigt einen Querschnitt durch eine weitere Ausführungsform einer Verbundscheibe 1 für eine erfindungsgemäße Projektionsanordnung 100. Die in der Fig. 6 gezeigte Ausführungsform unterscheidet sich von der in der Fig. 4 gezeigten nur dahingehend, dass die opake Maskierungsschicht 5 nicht auf der innenraumseitigen Oberfläche II der Außenscheibe 2 angeordnet ist, sondern als ein opak gefärbter Bereich der thermoplastischen Zwischenschicht 4 ausgebildet ist.

In einer erfindungsgemäßen Projektionsanordnung 100 mit einer Verbundscheibe 1 gemäß der in der Fig. 6 gezeigten Ausführungsform ist die Strahlung der Bildanzeigevorrichtung 6 bevorzugt vollständig oder nahezu vollständig s-polarisiert und das von der Bildanzeigevorrichtung 6 abgestrahlte s-polarisierte Licht wird an der innenraumseitigen Oberfläche IV der Innenscheibe 3 in Richtung des Betrachters reflektiert.

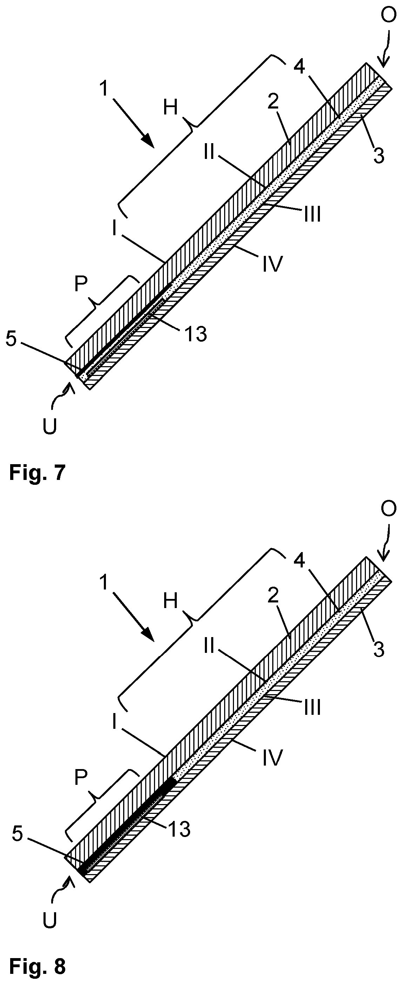

Fig. 7 zeigt einen Querschnitt durch eine weitere Ausführungsform einer Verbundscheibe 1 für eine erfindungsgemäße Projektionsanordnung 100. Die in der Fig. 7 gezeigte Ausführungsform unterscheidet sich von der in der Fig. 4 gezeigten nur dahingehend, dass im Projektionsbereich P zwischen der Innenscheibe 3 und der thermoplastischen Zwischenschicht 4 ein Reflexionselement 13 zur Reflexion von sichtbarem Licht angeordnet ist. Das Reflexionselement 13 ist beispielsweise als eine Beschichtung der außenseitigen Oberfläche III der Innenscheibe 3 ausgebildet. Alternativ kann das Reflexionselement 13 auch als eine Beschichtung auf einer Dünnglasscheibe oder Folie oder als eine reflektierende Folie ausgebildet sein, welche zwischen der thermoplastischen Zwischenschicht 4 und der Innenscheibe 3 angeordnet ist. Optional kann sich das Reflexionselement 13 auch über die gesamte Verbundscheibe 1 erstrecken.

In einer erfindungsgemäßen Projektionsanordnung 100 mit einer Verbundscheibe 1 gemäß der in der Fig. 7 gezeigten Ausführungsform ist die Strahlung der Bildanzeigevorrichtung 6 bevorzugt vollständig oder nahezu vollständig p-polarisiert und das von der Bildanzeigevorrichtung 6 abgestrahlte p-polarisierte Licht wird an dem Reflexionselement 13 in Richtung des Betrachters reflektiert.

In der in der Fig. 7 gezeigten Ausführungsform einer Verbundscheibe 1 ist das Reflexionselement 13 zwischen der Innenscheibe 3 und der thermoplastischen Zwischenschicht 4 angeordnet. Es versteht sich, dass, wenn das Reflexionselement 13 als eine Beschichtung auf einer Dünnglasscheibe oder Folie oder als eine reflektierende Folie ausgebildet ist, dieses alternativ auch zwischen der thermoplastischen Zwischenschicht 4 und der Außenscheibe 2 angeordnet sein kann, wobei das Reflexionselement 13 in Durchsicht durch die Verbundscheibe 1 räumlich vor der opaken Maskierungsschicht 5 angeordnet ist.

Fig. 8 zeigt einen Querschnitt durch eine weitere Ausführungsform einer Verbundscheibe 1 für eine erfindungsgemäße Projektionsanordnung 100. Die in der Fig. 8 gezeigte Ausführungsform unterscheidet sich von der in der Fig. 6 gezeigten nur dahingehend, dass im Projektionsbereich P zwischen der Innenscheibe 3 und der thermoplastischen Zwischenschicht 4 ein Reflexionselement 13 zur Reflexion von sichtbarem Licht angeordnet ist. Das Reflexionselement 13 ist beispielsweise als eine Beschichtung der außenseitigen Oberfläche III der Innenscheibe 3 ausgebildet. Alternativ kann das Reflexionselement 13 auch als eine Beschichtung auf einer Dünnglasscheibe oder Folie ausgebildet sein, welche zwischen der thermoplastischen Zwischenschicht 4 und der Innenscheibe 3 angeordnet ist. Optional kann sich das Reflexionselement 13 auch über die gesamte Verbundscheibe 1 erstrecken.

In einer erfindungsgemäßen Projektionsanordnung 100 mit einer Verbundscheibe 1 gemäß der in der Fig. 8 gezeigten Ausführungsform ist die Strahlung der Bildanzeigevorrichtung 6 bevorzugt vollständig oder nahezu vollständig p-polarisiert und das von der Bildanzeigevorrichtung 6 abgestrahlte p-polarisierte Licht wird an dem Reflexionselement 13 in Richtung des Betrachters reflektiert.

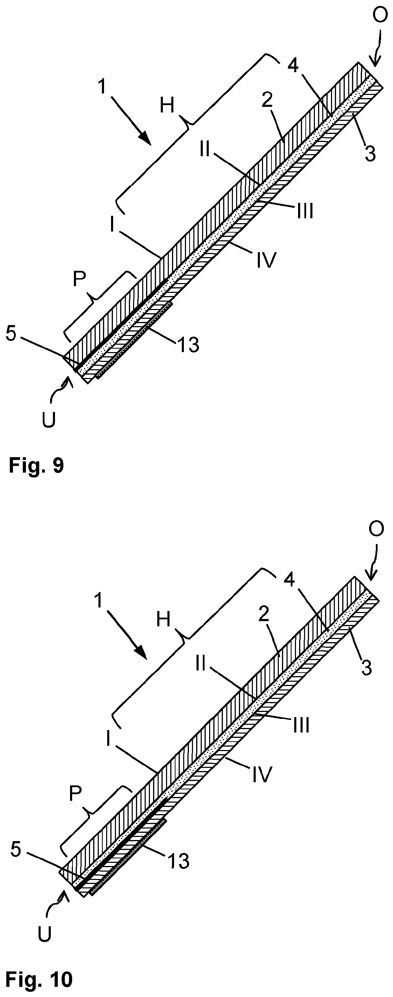

Fig. 9 zeigt einen Querschnitt durch eine weitere Ausführungsform einer Verbundscheibe 1 für eine erfindungsgemäße Projektionsanordnung 100. Die in der Fig. 9 gezeigte Ausführungsform unterscheidet sich von der in der Fig. 4 gezeigten nur dahingehend, dass im Projektionsbereich P an der innenraumseitigen Oberfläche IV der Innenscheibe 3 ein Reflexionselement 13 zur Reflexion von sichtbarem Licht angeordnet ist. Das Reflexionselement 13 ist beispielsweise als eine Beschichtung der innenraumseitigen Oberfläche IV der Innenscheibe 3 ausgebildet. Alternativ kann das Reflexionselement 13 auch als eine Beschichtung auf einer Dünnglasscheibe oder Folie oder als eine reflektierende Folie ausgebildet sein, welche auf die innenraumseitige Oberfläche IV der Innenscheibe 3 geklebt ist. Optional kann sich das Reflexionselement 13 auch über die gesamte Verbundscheibe 1 erstrecken.

In einer erfindungsgemäßen Projektionsanordnung 100 mit einer Verbundscheibe 1 gemäß der in der Fig. 9 gezeigten Ausführungsform ist die Strahlung der Bildanzeigevorrichtung 6 bevorzugt vollständig oder nahezu vollständig p-polarisiert und das von der Bildanzeigevorrichtung 6 abgestrahlte p-polarisierte Licht wird an dem Reflexionselement 13 in Richtung des Betrachters reflektiert.

Fig. 10 zeigt einen Querschnitt durch eine weitere Ausführungsform einer Verbundscheibe 1 für eine erfindungsgemäße Projektionsanordnung 100. Die in der Fig. 10 gezeigte Ausführungsform unterscheidet sich von der in der Fig. 5 gezeigten nur dahingehend, dass im Projektionsbereich P an der innenraumseitigen Oberfläche IV der Innenscheibe 3 ein Reflexionselement 13 zur Reflexion von sichtbarem Licht angeordnet ist. Das Reflexionselement 13 ist beispielsweise als eine Beschichtung der innenraumseitigen Oberfläche IV der Innenscheibe 3 ausgebildet. Alternativ kann das Reflexionselement 13 auch als eine Beschichtung auf einer Dünnglasscheibe oder Folie oder als eine reflektierende Folie ausgebildet sein, welche auf die innenraumseitige Oberfläche IV der Innenscheibe 3 geklebt ist. Optional kann sich das Reflexionselement 13 auch über die gesamte Verbundscheibe 1 erstrecken.

In einer erfindungsgemäßen Projektionsanordnung 100 mit einer Verbundscheibe 1 gemäß der in der Fig. 10 gezeigten Ausführungsform ist die Strahlung der Bildanzeigevorrichtung 6 bevorzugt vollständig oder nahezu vollständig p-polarisiert und das von der Bildanzeigevorrichtung 6 abgestrahlte p-polarisierte Licht wird an dem Reflexionselement 13 in Richtung des Betrachters reflektiert.

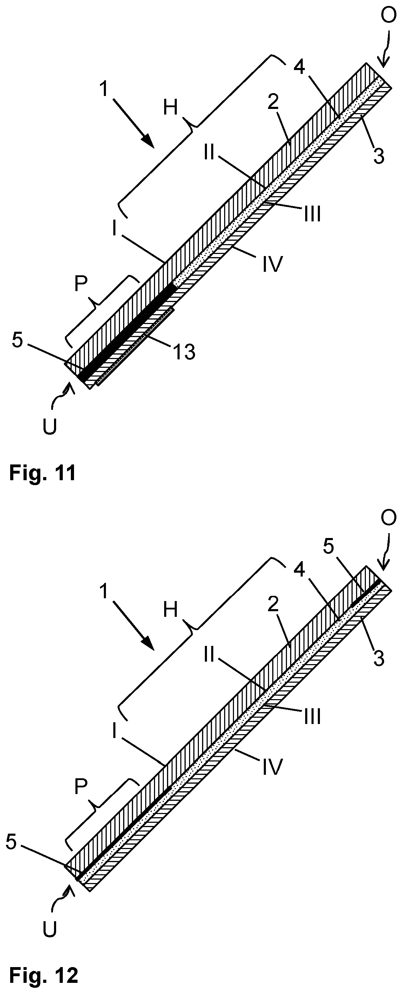

Fig. 11 zeigt einen Querschnitt durch eine weitere Ausführungsform einer Verbundscheibe 1 für eine erfindungsgemäße Projektionsanordnung 100. Die in der Fig. 11 gezeigte Ausführungsform unterscheidet sich von der in der Fig. 6 gezeigten nur dahingehend, dass im Projektionsbereich P an der innenraumseitigen Oberfläche IV der Innenscheibe 3 ein Reflexionselement 13 zur Reflexion von sichtbarem Licht angeordnet ist. Das Reflexionselement 13 ist beispielsweise als eine Beschichtung der innenraumseitigen Oberfläche IV der Innenscheibe 3 ausgebildet. Alternativ kann das Reflexionselement 13 auch als eine Beschichtung auf einer Dünnglasscheibe oder Folie oder als eine reflektierende Folie ausgebildet sein, welche auf die innenraumseitige Oberfläche IV der Innenscheibe 3 geklebt ist. Optional kann sich das Reflexionselement 13 auch über die gesamte Verbundscheibe 1 erstrecken.

In einer erfindungsgemäßen Projektionsanordnung 100 mit einer Verbundscheibe 1 gemäß der in der Fig. 11 gezeigten Ausführungsform ist die Strahlung der Bildanzeigevorrichtung 6 bevorzugt vollständig oder nahezu vollständig p-polarisiert und das von der Bildanzeigevorrichtung 6 abgestrahlte p-polarisierte Licht wird an dem Reflexionselement 13 in Richtung des Betrachters reflektiert.

Fig. 12 zeigt einen Querschnitt durch eine weitere Ausführungsform einer Verbundscheibe 1 für eine erfindungsgemäße Projektionsanordnung 100. Die in der Fig. 12 gezeigte Ausführungsform unterscheidet sich von der in der Fig. 4 gezeigten nur dahingehend, dass die opake Maskierungsschicht 5 in einem umlaufenden Randbereich angeordnet ist, welcher in einem Abschnitt, der in Überdeckung zum Projektionsbereich P ist, eine größere Breite aufweist als in den hiervon verschiedenen Abschnitten. Der Bereich, in dem die opake Maskierungsschicht 5 angeordnet ist, umfasst somit einen umlaufenden Randbereich und den Projektionsbereich P.

Es versteht sich, dass auch die in den Fig. 5 bis 11 gezeigten Verbundscheiben 1 dahingehend modifiziert werden können, dass die opake Maskierungsschicht 5 in einem umlaufenden Randbereich angeordnet ist, welcher in einem Abschnitt, der in Überdeckung zum Projektionsbereich P ist, eine größere Breite aufweist als in den hiervon verschiedenen Abschnitten.

In einer erfindungsgemäßen Projektionsanordnung 100 mit einer Verbundscheibe 1 gemäß der in der Fig. 12 gezeigten Ausführungsform ist die Strahlung der Bildanzeigevorrichtung 6 bevorzugt vollständig oder nahezu vollständig s-polarisiert und das von der Bildanzeigevorrichtung 6 abgestrahlte s-polarisierte Licht wird an der innenraumseitigen Oberfläche IV der Innenscheibe 3 in Richtung des Betrachters reflektiert.

Fig. 13 zeigt einen Querschnitt durch eine weitere Ausführungsform einer erfindungsgemäßen Projektionsanordnung 100. Die in der Fig. 13 gezeigte Ausführungsform unterscheidet sich von der in der Fig. 1 und 2 gezeigten nur dahingehend, dass die Projektionsanordnung 100 zusätzlich eine Detektionsvorrichtung 11 zur Detektion der Augenposition des Betrachters und eine elektronische Kontrolleinrichtung 12 aufweist. Die elektronische Kontrolleinrichtung 12 ist dazu eingerichtet auf Basis der mittels der Detektionsvorrichtung 11 ermittelten Augenposition die der Augenposition zugehörige Position der Eyebox 10a, 10b, 10c zu ermitteln und ein elektrisches Signal an das Steuerelement 7 abzugeben zur selektiven Ansteuerung der zu der ermittelten Position der Eyebox 10a, 10b, 10c zugehörigen Matrix 8a, 8b, 8c. Zur vereinfachten Darstellung sind in der Fig. 13 die Matrizen 8a, 8b, 8c nicht markiert.

Die Verbundscheibe 1 kann in der in der Fig. 13 gezeigten Ausführungsform der Projektionsanordnung beispielweise wie in einer der Fig. 4 bis 12 gezeigt ausgebildet sein.

### Bezugszeichenliste:

- 100: Projektionsanordnung

- 1: Verbundscheibe
- 2: Außenscheibe
- 3: Innenscheibe
- 4: thermoplastische Zwischenschicht
- 5: opake Maskierungsschicht
- 6: Bildanzeigevorrichtung
- 7: Steuerelement
- 8a, 8b, 8c: Matrix
- 9a, 9b, 9c: virtuelles Bild
- 10a, 10b, 10c: Eyebox
- 11: Detektionsvorrichtung
- 12: elektronische Kontrolleinrichtung
- 13: Reflexionselement

- O: Oberkante der Verbundscheibe 1
- U: Unterkante der Verbundscheibe 1
- S: Seitenkante der Verbundscheibe 1
- P: Projektionsbereich der Verbundscheibe 1
- H: Hauptdurchsichtsbereich der Verbundscheibe 1

- I: außenseitige Oberfläche der Außenscheibe 2
- II: innenraumseitige Oberfläche der Außenscheibe 2
- III: außenseitige Oberfläche der Innenscheibe 3
- IV: innenraumseitige Oberfläche der Innenscheibe 3
- X'-X: Schnittlinie

## Patentansprüche

1. Projektionsanordnung (100) zur Darstellung eines virtuellen Bildes (9a, 9b, 9c) für einen Betrachter, dessen Augenposition sich in einer Eyebox (10a, 10b, 10c) befindet, mindestens umfassend
- eine Verbundscheibe (1) mit einem Projektionsbereich (P), einem Hauptdurchsichtsbereich (H), einer Oberkante (O), einer Unterkante (U) und zwei seitlichen Scheibenkanten (S), wobei der Projektionsbereich (P) außerhalb des Hauptdurchsichtbereichs (H) angeordnet ist und die Verbundscheibe (1) eine Außenscheibe (2) mit einer außenseitigen Oberfläche (I) und einer innenraumseitigen Oberfläche (II), eine Innenscheibe (3) mit einer außenseitigen Oberfläche (III) und einer innenraumseitigen Oberfläche (IV) und eine zwischen der Außenscheibe (2) und der Innenscheibe (3) angeordnete thermoplastische Zwischenschicht (4) umfasst und außerhalb des Hauptdurchsichtsbereichs (H) zumindest im Projektionsbereich (P) eine opake Maskierungsschicht (5) aufweist,
- eine innenraumseitig angeordnete Bildanzeigevorrichtung (6), welche auf den Projektionsbereich (P) gerichtet ist, wobei die Bildanzeigevorrichtung (6) eine Matrixanzeige ist, und
- ein Steuerelement (7), welches geeignet ist, selektiv verschiedene Matrizen (8a, 8b, 8c) der Bildanzeigevorrichtung (6) zur Darstellung des virtuellen Bildes (9a, 9b, 9c) für verschiedene Positionen der Eyebox (10a, 10b, 10c) anzusteuern.

2. Projektionsanordnung (100) nach Anspruch 1, wobei das Steuerelement (7) geeignet ist, zumindest für eine obere Position der Eyebox (10a) eine erste Matrix (8a), für eine mittlere Position der Eyebox (10b) eine zweite Matrix (8b) und für eine untere Position der Eyebox (10c) eine dritte Matrix (8c) der Bildanzeigevorrichtung (6) anzusteuern.

3. Projektionsanordnung (100) nach Anspruch 1 oder 2, wobei die opake Maskierungsschicht (5) in einem umlaufenden Randbereich angeordnet ist und insbesondere in einem Abschnitt, der in Überdeckung zum Projektionsbereich (P) ist, eine größere Breite aufweist als in hiervon verschiedenen Abschnitten.

4. Projektionsanordnung (100) nach einem der Ansprüche 1 bis 3, zusätzlich umfassend eine Anpassungseinheit, welche aus vom Betrachter eingegebenen Angaben zu seiner Augenposition die der Augenposition zugehörige Position der Eyebox (10a, 10b, 10c) ermittelt und ein elektrisches Signal an das Steuerelement (7) zur selektiven Ansteuerung der zu der ermittelten Position der Eyebox (10a, 10b, 10c) zugehörigen Matrix (8a, 8b, 8c) abgibt.

5. Projektionsanordnung (100) nach einem der Ansprüche 1 bis 4, zusätzlich umfassend eine Detektionsvorrichtung (11) zur Detektion der Augenposition des Betrachters und eine elektronische Kontrolleinrichtung (12), welche dazu eingerichtet ist, auf Basis der mittels der Detektionsvorrichtung (11) ermittelten Augenposition die der Augenposition zugehörige Position der Eyebox (10a, 10b, 10c) zu ermitteln und ein elektrisches Signal an das Steuerelement (7) abzugeben zur selektiven Ansteuerung der zu der ermittelten Position der Eyebox (10a, 10b, 10c) zugehörigen Matrix (8a, 8b, 8c).

6. Projektionsanordnung (100) nach Anspruch 5, wobei die Detektionsvorrichtung (11) eine Infrarotdetektion durchführt und eine Strahlungsquelle zum Aussenden von Infrarotstrahlung und einen Strahlungsempfänger zum Empfangen von Infrarotstrahlung aufweist.

7. Projektionsanordnung (100) nach Anspruch 6, wobei die Verbundscheibe (1) zusätzlich eine Infrarotstrahlung reflektierende Funktionsschicht aufweist und die Strahlungsquelle und der Strahlungsempfänger so angeordnet sind, dass von der Strahlungsquelle ausgesendete Infrarotstrahlung von der Funktionsschicht als erste Reflexionsstrahlung auf das Gesicht des Betrachters reflektiert werden kann, die erste Reflexionsstrahlung vom Gesicht des Betrachters als zweite Reflexionsstrahlung auf die Funktionsschicht reflektiert werden kann, und die von der Funktionsschicht als dritte Reflexionsstrahlung reflektierte zweite Reflexionsstrahlung zum Strahlungsempfänger reflektiert und vom Strahlungsempfänger empfangen werden kann.

8. Projektionsanordnung (100) nach einem der Ansprüche 1 bis 7, wobei die Bildanzeigevorrichtung (6) in Draufsicht gekrümmt ist.

9. Projektionsanordnung (100) nach einem der Ansprüche 1 bis 8, wobei die Verbundscheibe (1) gebogen ist.

10. Projektionsanordnung (100) nach Anspruch 8 oder 9, zusätzlich umfassend ein Verzerrelement.

11. Projektionsanordnung (100) nach einem der Ansprüche 1 bis 10, wobei die opake Maskierungsschicht (5) als eine Beschichtung der innenraumseitigen Oberfläche (II) der Außenscheibe (2) oder der außenseitigen Oberfläche (III) der Innenscheibe (3), als ein zwischen der Außenscheibe (2) und der Innenscheibe (3) angeordnetes opakes Einlegeelement oder als ein opak gefärbter Bereich der thermoplastischen Zwischenschicht (4) ausgebildet ist.

12. Projektionsanordnung (100) nach einem der Ansprüche 1 bis 11, wobei im Projektionsbereich (P) zwischen der Außenscheibe (2) und der Innenscheibe (3) oder auf der innenraumseitigen Oberfläche (IV) der Innenscheibe (3) ein Reflexionselement (13) zur Reflexion von sichtbarem Licht angeordnet ist und wobei das Reflexionselement (13) in Durchsicht durch die Verbundscheibe (1) räumlich vor der opaken Maskierungsschicht (5) angeordnet ist.

13. Kraftfahrzeug mit einer Projektionsanordnung (100) nach einem der Ansprüche 1 bis 12.

14. Verfahren zum Betrieb einer Projektionsanordnung (100) zur Darstellung eines virtuellen Bildes (9a, 9b, 9c) für einen Betrachter, dessen Augenposition sich in einer Eyebox (10a, 10b, 10c) befindet,
wobei die Projektionsanordnung (100) eine Verbundscheibe (1), eine Bildanzeigevorrichtung (6) und ein Steuerelement (7) umfasst,
die Verbundscheibe (1) einen Projektionsbereich (P), einen Hauptdurchsichtsbereich (H), eine Oberkante (O), eine Unterkante (U) und zwei seitliche Scheibenkanten (S) aufweist, wobei der Projektionsbereich (P) außerhalb des Hauptdurchsichtbereichs (H) angeordnet ist und die Verbundscheibe (1) eine Außenscheibe (2) mit einer außenseitigen Oberfläche (I) und einer innenraumseitigen Oberfläche (II), eine Innenscheibe (3) mit einer außenseitigen Oberfläche (III) und einer innenraumseitigen Oberfläche (IV) und eine zwischen der Außenscheibe (2) und der Innenscheibe (3) angeordnete thermoplastische Zwischenschicht (4) umfasst und außerhalb des Hauptdurchsichtsbereichs (H) zumindest im Projektionsbereich (P) eine opake Maskierungsschicht (5) aufweist,
wobei die Bildanzeigevorrichtung (6) innenraumseitig angeordnet ist, auf den Projektionsbereich (P) gerichtet ist und eine Matrixanzeige ist,
und wobei die Position der Eyebox (10a, 10b, 10c) ermittelt wird und das Steuerelement (7), zur Darstellung des virtuellen Bildes (9a, 9b, 9c) selektiv die zu der ermittelten Position der Eyebox (10a, 10b, 10c) zugehörige Matrix (8a, 8b, 8c) der Bildanzeigevorrichtung (6) ansteuert.

15. Verwendung einer Projektionsanordnung (100) nach einem der Ansprüche 1 bis 12 in Fahrzeugen für den Verkehr auf dem Lande, in der Luft oder zu Wasser, wobei die Verbundscheibe (1) bevorzugt eine Windschutzscheibe ist.

## Claims

1. Projection assembly (100) for displaying a virtual image (9a, 9b, 9c) for a viewer whose eye position is located in an eyebox (10a, 10b, 10c), at least comprising:
- a laminated pane (1) having a projection region (P), a main see-through region (H), an upper edge (O), a lower edge (U), and two lateral pane edges (S), wherein the projection region (P) is arranged outside the main see-through region (H), and the laminated pane (1) comprises an outer pane (2) having an outer surface (I) and an interior surface (II), an inner pane (3) having an outer surface (III) and an interior surface (IV), and a thermoplastic intermediate layer (4) arranged between the outer pane (2) and the inner pane (3), and has an opaque masking layer (5) outside the main see-through region (H), at least in the projection region (P),
- an image display device (6) arranged on the interior side, which is directed towards the projection region (P), wherein the image display device (6) is a matrix display, and
- a control element (7) that is suitable for selectively controlling different matrices (8a, 8b, 8c) of the image display device (6) for displaying the virtual image (9a, 9b, 9c) for different positions of the eyebox (10a, 10b, 10c).

2. Projection assembly (100) according to claim 1, wherein the control element (7) is suitable for controlling at least a first matrix (8a) for an upper position of the eyebox (10a), a second matrix (8b) for a middle position of the eyebox (10b) and a third matrix (8c) of the image display device (6) for a lower position of the eyebox (10c).

3. Projection assembly (100) according to claim 1 or 2, wherein the opaque masking layer (5) is arranged in a peripheral edge region and, in particular in a section which overlaps with the projection region (P) has a greater width than in sections different therefrom.

4. Projection assembly (100) according to any of claims 1 to 3, additionally comprising an adaptation unit that ascertains the position of the eyebox (10a, 10b, 10c) corresponding to the eye position from information entered by the viewer regarding his eye position and outputs an electrical signal to the control element (7) for selectively controlling the matrix (8a, 8b, 8c) corresponding to the ascertained position of the eyebox (10a, 10b, 10c).

5. Projection assembly (100) according to any of claims 1 to 4, additionally comprising a detection device (11) for detecting the eye position of the viewer and an electronic control device (12) that is configured to ascertain the position of the eyebox (10a, 10b, 10c) corresponding to the eye position on the basis of the eye position ascertained by means of the detection device (11), and to output an electrical signal to the control element (7) for selectively controlling the matrix (8a, 8b, 8c) corresponding to the ascertained position of the eyebox (10a, 10b, 10c).

6. Projection assembly (100) according to claim 5, wherein the detection device (11) performs infrared detection and has a radiation source for emitting infrared radiation and a radiation receiver for receiving infrared radiation.

7. Projection assembly (100) according to claim 6, wherein the laminated pane (1) additionally has a functional layer reflecting infrared radiation, and the radiation source and the radiation receiver are arranged so that infrared radiation emitted by the radiation source can be reflected by the functional layer onto the face of the viewer as first reflection radiation, the first reflection radiation can be reflected by the face of the viewer onto the functional layer as second reflection radiation, and the second reflection radiation reflected by the functional layer as third reflection radiation can be reflected to the radiation receiver and received by the radiation receiver.

8. Projection assembly (100) according to any of claims 1 to 7, wherein the image display device (6) is curved in plan view.

9. Projection assembly (100) according to any of claims 1 to 8, wherein the laminated pane (1) is bent.

10. Projection assembly (100) according to claim 8 or 9, additionally comprising a distortion element.

11. Projection assembly (100) according to any of claims 1 to 10, wherein the opaque masking layer (5) is formed as a coating of the interior surface (II) of the outer pane (2) or of the outer surface (III) of the inner pane (3), as an opaque insert element arranged between the outer pane (2) and the inner pane (3), or as an opaque colored region of the thermoplastic intermediate layer (4).

12. Projection assembly (100) according to any of claims 1 to 11, wherein a reflective element (13) for reflecting visible light is arranged in the projection region (P) between the outer pane (2) and the inner pane (3) or on the interior surface (IV) of the inner pane (3), and wherein the reflective element (13) is arranged spatially in front of the opaque masking layer (5) when viewed through the laminated pane (1).

13. Motor vehicle having a projection assembly (100) according to any of claims 1 to 12.

14. Method for operating a projection assembly (100) for displaying a virtual image (9a, 9b, 9c) for a viewer whose eye position is located in an eyebox (10a, 10b, 10c),
wherein the projection assembly (100) comprises a laminated pane (1), an image display device (6) and a control element (7),
the laminated pane (1) has a projection region (P), a main see-through region (H), an upper edge (O), a lower edge (U) and two lateral pane edges (S), wherein the projection region (P) is arranged outside the main see-through region (H), and the laminated pane (1) comprises an outer pane (2) having an outer surface (I) and an interior surface (II), an inner pane (3) having an outer surface (III) and an interior surface (IV), and a thermoplastic intermediate layer (4) arranged between the outer pane (2) and the inner pane (3), and has an opaque masking layer (5) outside the main see-through region (H), at least in the projection region (P),
wherein the image display device (6) is arranged on the interior side, is directed towards the projection region (P) and is a matrix display,
and wherein the position of the eyebox (10a, 10b, 10c) is ascertained and the control element (7) selectively controls the matrix (8a, 8b, 8c) of the image display device (6) corresponding to the ascertained position of the eyebox (10a, 10b, 10c) for displaying the virtual image (9a, 9b, 9c).

15. Use of a projection assembly (100) according to any of claims 1 to 12 in vehicles for traffic on land, in the air, or on water, wherein the laminated pane (1) is preferably a windshield.

## Revendications

1. Ensemble de projection (100) destiné à afficher une image virtuelle (9a, 9b, 9c) pour un observateur dont la position oculaire se trouve dans une eyebox (10a, 10b, 10c), comprenant au moins:
- une vitre feuilletée (1) comportant une zone de projection (P), une zone principale transparente (H), un bord supérieur (O), un bord inférieur (U) et deux bords latéraux (S), dans laquelle la zone de projection (P) est disposée à l'extérieur de la zone principale transparente (H), et la vitre feuilletée (1) comprend une vitre extérieure (2) présentant une surface extérieure (I) et une surface intérieure (II), une vitre intérieure (3) présentant une surface extérieure (III) et une surface intérieure (IV), et une couche intermédiaire thermoplastique (4) disposée entre la vitre extérieure (2) et la vitre intérieure (3), et comportant une couche de masquage opaque (5) à l'extérieur de la zone principale transparente (H), au moins dans la zone de projection (P),
- un dispositif d'affichage d'images (6) disposé sur le côté intérieur, qui est orienté vers la zone de projection (P), le dispositif d'affichage d'images (6) étant un écran matriciel, et
- un élément de commande (7) adapté pour commander de manière sélective différentes matrices (8a, 8b, 8c) du dispositif d'affichage d'images (6) afin d'afficher l'image virtuelle (9a, 9b, 9c) pour différentes positions de l'eyebox (10a, 10b, 10c).

2. Ensemble de projection (100) selon la revendication 1, dans lequel l'élément de commande (7) est adapté pour commander au moins une première matrice (8a) pour une position supérieure de l'eyebox (10a), une deuxième matrice (8b) pour une position intermédiaire de l'eyebox (10b) et une troisième matrice (8c) du dispositif d'affichage d'images (6) pour une position inférieure de l'eyebox (10c).

3. Ensemble de projection (100) selon la revendication 1 ou 2, dans lequel la couche de masquage opaque (5) est disposée dans une zone de bord périphérique et, en particulier dans une section qui chevauche la zone de projection (P), présente une largeur supérieure à celle des sections qui s'en distinguent.

4. Ensemble de projection (100) selon l'une quelconque des revendications 1 à 3, comprenant en outre une unité d'adaptation qui détermine la position de l'eyebox (10a, 10b, 10c) correspondant à la position de l'œil à partir d'informations saisies par le spectateur concernant sa position oculaire et qui transmet un signal électrique à l'élément de commande (7) pour commander de manière sélective la matrice (8a, 8b, 8c) correspondant à la position déterminée de l'eyebox (10a, 10b, 10c).

5. Ensemble de projection (100) selon l'une quelconque des revendications 1 à 4, comprenant en outre un dispositif de détection (11) destiné à détecter la position de l'œil du spectateur et un dispositif de commande électronique (12) qui est configuré pour déterminer la position de l'eyebox (10a, 10b, 10c) correspondant à la position de l'œil sur la base de la position de l'œil déterminée au moyen du dispositif de détection (11), et à délivrer un signal électrique à l'élément de commande (7) pour commander de manière sélective la matrice (8a, 8b, 8c) correspondant à la position déterminée de l'eyebox (10a, 10b, 10c).

6. Ensemble de projection (100) selon la revendication 5, dans lequel le dispositif de détection (11) effectue une détection infrarouge et comporte une source de rayonnement pour émettre un rayonnement infrarouge et un récepteur de rayonnement pour recevoir un rayonnement infrarouge.

7. Ensemble de projection (100) selon la revendication 6, dans lequel la vitre feuilletée (1) comporte en outre une couche fonctionnelle réfléchissant le rayonnement infrarouge, et la source de rayonnement et le récepteur de rayonnement sont agencés de telle sorte que le rayonnement infrarouge émis par la source de rayonnement puisse être réfléchi par la couche fonctionnelle sur le visage de l'observateur en tant que premier rayonnement de réflexion, le rayonnement de première réflexion puisse être réfléchi par le visage de l'observateur vers la couche fonctionnelle sous forme de rayonnement de deuxième réflexion, et le rayonnement de deuxième réflexion réfléchi par la couche fonctionnelle sous forme de rayonnement de troisième réflexion puisse être réfléchi vers le récepteur de rayonnement et reçu par celui-ci.

8. Ensemble de projection (100) selon l'une quelconque des revendications 1 à 7, dans lequel le dispositif d'affichage d'images (6) est incurvé en vue en plan.

9. Ensemble de projection (100) selon l'une quelconque des revendications 1 à 8, dans lequel la vitre feuilletée (1) est courbée.

10. Ensemble de projection (100) selon la revendication 8 ou 9, comprenant en outre un élément de distorsion.

11. Ensemble de projection (100) selon l'une quelconque des revendications 1 à 10, dans lequel la couche de masquage opaque (5) est formée sous la forme d'un revêtement de la surface intérieure (II) de la vitre extérieure (2) ou de la surface extérieure (III) de la vitre intérieure (3), sous la forme d'un élément d'insertion opaque disposé entre la vitre extérieure (2) et la vitre intérieure (3), ou sous la forme d'une zone colorée opaque de la couche intermédiaire thermoplastique (4).

12. Ensemble de projection (100) selon l'une quelconque des revendications 1 à 11, dans lequel un élément réfléchissant (13) destiné à réfléchir la lumière visible est disposé dans la zone de projection (P) entre la vitre extérieure (2) et la vitre intérieure (3) ou sur la surface intérieure (IV) de la vitre intérieure (3), et dans lequel l'élément réfléchissant (13) est disposé spatialement devant la couche de masquage opaque (5) lorsqu'on regarde à travers la vitre feuilletée (1).

13. Véhicule automobile comportant un ensemble de projection (100) selon l'une quelconque des revendications 1 à 12.

14. Procédé de mise en œuvre d'un ensemble de projection (100) destiné à afficher une image virtuelle (9a, 9b, 9c) pour un observateur dont la position des yeux se trouve dans une eyebox (10a, 10b, 10c),
dans lequel l'ensemble de projection (100) comprend une vitre feuilletée (1), un dispositif d'affichage d'images (6) et un élément de commande (7),
la vitre feuilletée (1) comporte une zone de projection (P), une zone principale transparente (H), un bord supérieur (O), un bord inférieur (U) et deux bords latéraux (S), dans lequel la zone de projection (P) est disposée à l'extérieur de la zone principale transparente (H), et la vitre feuilletée (1) comprend une vitre extérieure (2) présentant une surface extérieure (I) et une surface intérieure (II), une vitre intérieure (3) présentant une surface extérieure (III) et une surface intérieure (IV), et une couche intermédiaire thermoplastique (4) disposée entre la vitre extérieure (2) et la vitre intérieure (3), et comporte une couche de masquage opaque (5) à l'extérieur de la zone principale transparente (H), au moins dans la zone de projection (P),
dans lequel le dispositif d'affichage d'images (6) est disposé du côté intérieur, est orienté vers la zone de projection (P) et est un écran matriciel,
et dans lequel la position de l'eyebox (10a, 10b, 10c) est déterminée et l'élément de commande (7) commande de manière sélective la matrice (8a, 8b, 8c) du dispositif d'affichage d'images (6) en fonction de la position déterminée de l'eyebox (10a, 10b, 10c) pour afficher l'image virtuelle (9a, 9b, 9c).

15. Utilisation d'un ensemble de projection (100) selon l'une quelconque des revendications 1 à 12 dans des véhicules destinés à la circulation terrestre, aérienne ou maritime, dans laquelle la vitre feuilletée (1) est de préférence un pare-brise.
